# EUROPEAN PATENT APPLICATION

(11) **EP 0 855 821 A1**
(43) Date of publication of application: **29.07.1998**
(21) Application number: 97308872.7
(22) Date of filing: 05.11.1997
(51) Int. Cl.: H04L 12/58, H04L 29/06

(54) **Methods and apparatus for providing universal readability of electronic mail attachments**

(30) Priority: 16.01.1997 US 786354
(71) Applicant: AT&T Corp., New York, NY 10013-2412 (US)
(72) Inventor: Alfred, Joseph Anderson, Somerset, New Jersey, 08873 (US); Sommer, Joseph M., Rutherford, New Jersey, 070707 (US)
(74) Representative: Harding, Richard Patrick

(57) **Abstract**

Systems and methods for providing fully readable email and attachments where senders and receivers are connected by less than fully compatible email providers or have less than fully compatible software. For example, where a sender employs word processing or graphics software not employed by the intended recipient, a network service provider downloads a loaner or loaners to the recipient so that the recipient can fully read or utilize the email and attachments. Preferably, the loaner or loaners are destroyed once the email and attachments have received. Alternatively, rather than downloading a loaner, access to a web site may be provided to the recipient who can download a fully utilizable copy of the email and attachments by facsimile, for example. In either case, senders and receivers no longer need to have the same software programs to fully communicate utilizing email.

## Description

### Field of the Invention

The present invention relates generally to enhancements to electronic mail ("email") communication systems, and more particularly to improvements making it possible for email recipients to read all the attachments to an email sent by a sender even though the recipient does not have the same software as the sender, or does not utilize the same email provider.

### Background of the Invention

Email has become a ubiquitous form of communication. Presently, a receiver may need to have the same software application or program, even the same version of that software in some cases, as the sender. Further, in some cases, a receiver and sender must have the same email provider in order for attachments to email to be read successfully by the recipient. For example, compatibility problems can arise where a sender and receiver utilize different email providers, or where a sender creates an email attachment utilizing a word processor, spread sheet, or graphics program, and the recipient has a different word processor, spread sheet, or graphics program or lacks the program entirely. For the word processor, spread sheet and graphics examples, the same may hold true if the sender and recipient have different versions of the same program.

### Summary of the Invention

The present invention recognizes the need to improve upon the readability and accessibility of email attachments with the goal of making such attachments universally readable so that email can compete more successfully with alternative modes of communication. To this end, the present invention provides a variety of approaches to addressing incompatibility problems such as those noted above.

According to one aspect of the present invention, adaptations to existing email related hardware, software or networks are made to identify needed loaner software and to allow a recipient to receive a loaner software program for limited uses, such as viewing or printing a formerly incompatible attachment. The loaner may be deactivated after the email attachment is read or printed, or the user may be given the option of paying for additional usage of the loaner. Either the sender or the recipient may be charged an appropriate fee for the use of the loaner.

Alternatively, the attachment may be moved to a web site which has the necessary software to allow the receiver to view and print the attachment utilizing for example web browser software. The user may be given the option of downloading web browser software if he or she does not have it or does not have the correct version of the browser. Where sensitive information is involved, password protection or other security features may be desirably provided.

In one aspect of the present invention, a user generates a profile upon subscribing to a service offering the benefits of the present invention. That profile might suitably indicate the software employed by the user, as well as, indicating various user preferences, such as whether the user wants (1) to receive hard copies of any incompatible email attachments by facsimile, (2) to download a loaner program, or (3) to review email and attachments on a web site and then having the option to print the email and attachments utilizing web browser software. With this approach, as an email and attachments are being sent to a subscribing user, a network service provider may retrieve the user's profile and automatically provide the desired service to the user.

A more complete understanding of the present invention, as well as further features and advantages of the invention, will be apparent from the following Detailed Description and the accompanying drawings.

### Brief Description of the Drawings

Fig. 1 is an overall block diagram of an email communication system in accordance with the present invention.
Fig. 2 is a flowchart of a first method of providing universal readability of email attachments in accordance with the present invention;
Fig. 3 illustrates a message format including indicators in accordance with the present invention;
Fig. 4 is a flowchart of a second method of providing universal readability of email attachments in accordance with the present invention; and
Figs. 5A and 5B illustrate possible suitable menu displays for senders and recipients respectively to select and pay for a loaner program or programs.

### Detailed Description

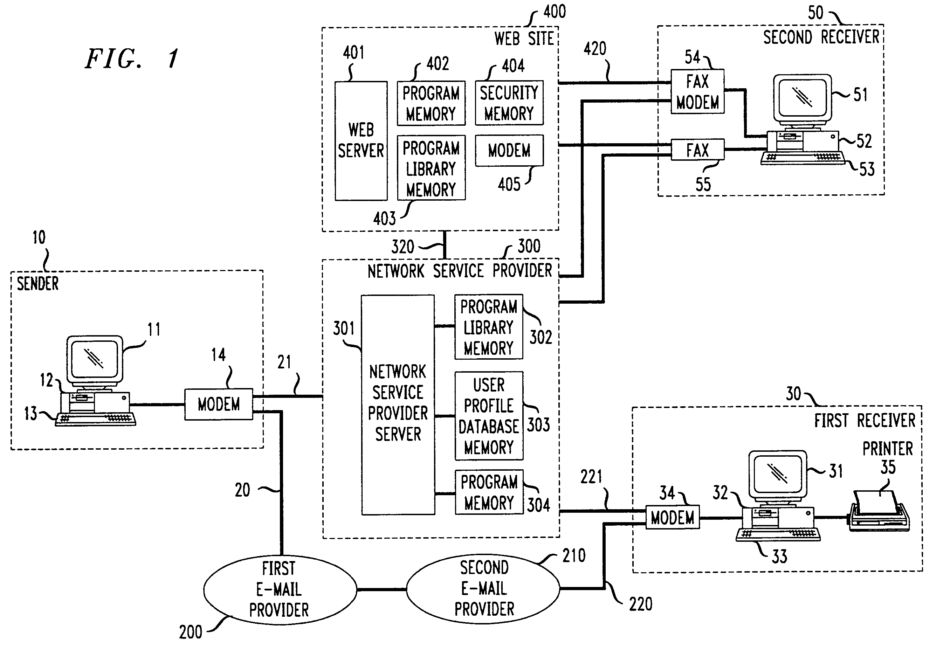

Fig. 1 shows an overall system 100 for carrying out the present invention. System 100 includes a sender 10 connected through a modem 14 to a network connection 20 which connects the sender 10 to a first email provider 200. Email provider 200 is in turn connected to a second email provider 210 which is connected by a network connection 220 through a modem 34 to a first receiver 30. The sender 10 is also connected through modem 14 and a network connection 21 to a network service provider 300 which is in turn connected by a network connection through modem 34 to the first receiver 30. The remainder of Fig. 1 will be discussed below following a discussion of how sender 10 and receiver 30 may suitably operate in conjunction with the network service provider 300 so that a user of the receiver 30 can completely read or utilize attachments sent with email by the sender 10 even where the receiver 30 employs a different email provider 221 than the email provider 220 employed by sender 10, or where sender 10 employs software, such as word processing, spread sheet, graphics or the like, to create the attachments and the receiver 30 does not have that software or has a different version with different features.

Sender 10 is shown as a personal computer or workstation including a display 11, central processing unit 12 including a processor, memory and control software and a keyboard 13. It may also include a variety of other input and output devices such as a printer, scanner, facsimile machine, video input and audio inputs, or the like. A modem 14 which will typically be located within the cabinet for the central processing unit 12 is shown externally for ease of illustration. The first receiver 30 is shown in Fig. 1 as including a display 31, a central processing unit 32, a keyboard 33, a modem 34 and a printer 35. As noted above for sender 10, it will be recognized that the first receiver 30 may suitably include a wide variety of other inputs and outputs.

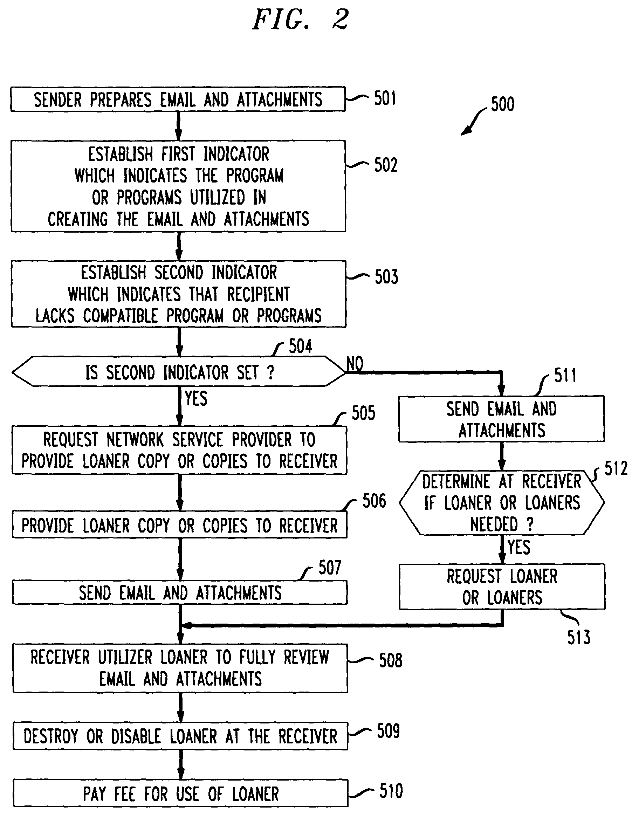

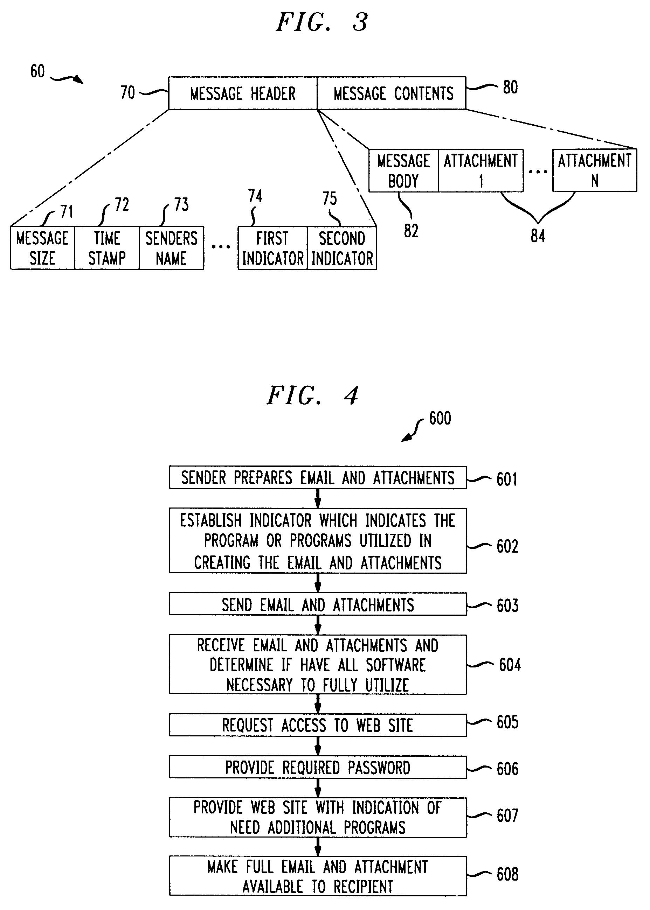

A first method of operation of the above components is described in conjunction with Fig. 2 which illustrates a process of operation 500. In step 501 of this process, a user of a sending terminal such as sender 10 prepares an email and attachments to be sent to a recipient who utilizes a receiver such as the receiver 30. In step 502, the user either manually responds to automatic program controlled prompts of the sender 10 to enter the identity of any programs utilized to create the email and attachments, or alternatively the sender 10 may be suitably programmed to automatically make a determination of the resources utilized in creating the email and attachments. For example, the processor of central processing unit 12 may be suitably programmed to create a log or list of all software applications or programs opened during the creation of the email and attachments. In either case, a first indicator is established which indicates the program or programs utilized in creating the email and attachments. As illustrated in Fig. 3, the indicator may be embodied as a modification or adaptation of the X400 message standard of the International Consultative Committee on Telephony and Telegraphy (CCITT). In this format, a message 60 consists of a message header 70, containing information concerning message size 71, a time stamp 72, a sender's name 73 and the like. To this information, the present invention adds an indicator 74 which provides information regarding the resources utilized to create the email and attachments. The message 60 also includes email text or message contents 80 comprising main body of the message 82 and attachments 84. Additionally, where the user at sender 10 knows that the user at receiver 30 lacks compatible software, a second indicator may be established at step 503. For example, the recipient may have sent an email to the sender indicating that he cannot read the email in its entirety or the sender may know this from past experience. In any case, this information may be included in indicator 74 or be part of a second indicator 75 indicative of a receiver's need for a loaner or loaner programs as shown in Fig. 3.

In a presently preferred alternative embodiment, the receiver will be a subscriber of services provided by the network service provider 300. In this case, the user will preferably enter a user profile at the time of subscribing which indicates the resources available to the user, as well as a preferred option for gaining access to incompatible email and attachments. This user profile data will be preferably stored in a user profile database stored in a memory 303 and updated as the user's resources change or if the user's preferred access option changes. At the time service is provided, the user may be given a chance to confirm or change his or her preference. As a further aspect of this presently preferred embodiment, the user may be asked to assent to any necessary license or contract terms required to utilize software not previously purchased or licensed by the user. In any case, when the email and attachments are sent, the intended recipient or recipients are identified by the network service provider 300. The network service provider 300 then determines if a recipient is a user with a stored profile, and if so, proceeds automatically to provide the desired service. For example, the network service provider 300 can cause a hard copy of the email and attachments to be faxed to the user, cause a loaner program to be downloaded as discussed in greater detail below, or cause the email and attachments to be routed to a web site where the user can access them.

Returning to Fig. 2, at the time the email and attachments are sent, in step 504, the email software at sender 10 preferably checks to see if the second indicator indicates that the recipient lacks a compatible program or programs. If this check shows that "yes" compatibility is lacking, then the email software at sender 10 checks the first indicator, makes a connection to the network service provider, such as network service provider 300, and requests the network service provider to provide a loaner copy or copies of software required for compatibility to the first receiver 30. Alternatively, the connection to the network service provider 300 may be automatic, and the network service provider 300 may proceed automatically to provide compatibility to the intended receiver.

To this end, a network service provider 300 may suitably be embodied to carry out standard network services. It is also further embodied to store application software which can be downloaded on request. To this end, network service provider 300 will include at least one network server 301 suitably programmed to carry out the functions further described below and suitable program library memory 302 for storing a library of application software, such as word processors, spread sheets and graphics programs and the like. It will also preferably include the user profile database memory 303 discussed above.

In step 506, the network service provider 300 responds to the request, connects to the first receiver, and provides the loaner copy or copies to the receiver 30. As shown in Fig. 2, the email and attachments are then sent, in step 507. It will be recognized, however, that the email and attachments can be sent prior to the request of step 505 or at the time of providing the loaner in step 506 as the order of these steps is not critical.

In step 508, a user utilizing the receiver 30 employs the loaner or loaners to fully review the email and attachments.

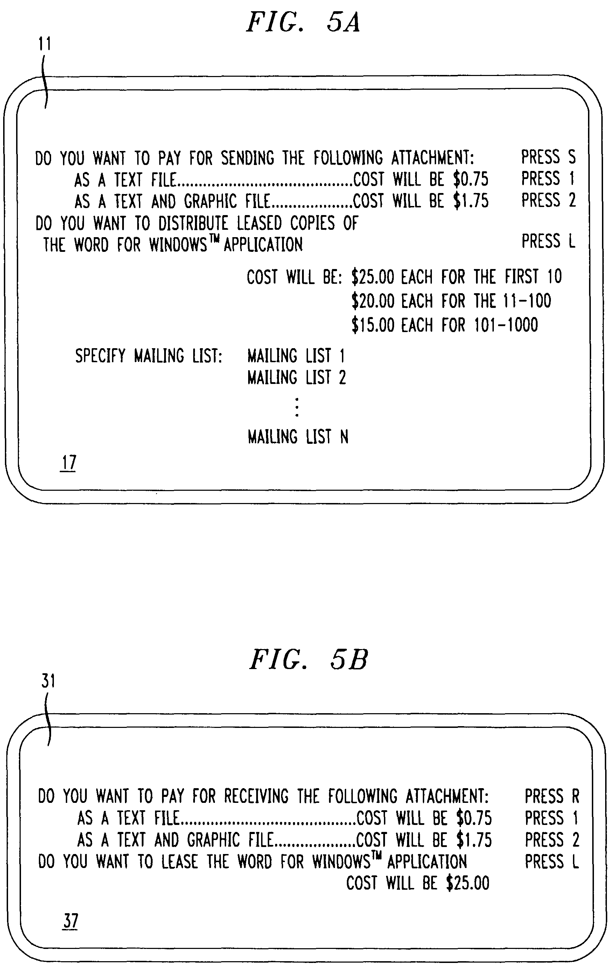

In step 509, once the user has completed his or her review of the email and attachments, for example, by closing the file or printing out the email and attachments, the loaner copy is disabled or destroyed. This decommissioning of loaned software may be automatic or may occur after giving the user a chance to purchase additional usage. Alternatively, the loaner may be destroyed or disabled after a predetermined number of uses or after a predetermined time period, such as 24 hours, has elapsed. Finally, where payment is to be made by the sender, the receiver, or the network service provider for the loaner, in step 510, the required fee for use of the loaner is paid. A variety of presently preferred payment options are discussed further below in conjunction with the discussion of Figs. 5A and 5B.

Returning to step 503, if the user or the sender had not known whether the recipient had compatible programs, then at step 504, the process 500 would proceed on the "no" branch to step 511 in which the email and attachments along with an indication of the program or programs utilized in creating the email and attachments would be sent to the recipient at a receiver, such as the receiver 30. The receiver 30 subject to suitable software control can either check the indication of utilized software or may also automatically determine what software is needed to fully utilize the email and attachments. Alternatively, a user may manually enter this information, for example, by using a keyboard, such as the keyboard 33, or as mentioned above, the network service provider may automatically check a user's stored profile. In any case, in step 512, it is determined whether a loaner or loaners are necessary to fully utilize the email and attachments.

If a loaner is needed, then, in step 513, the necessary loaner is requested. For example, the receiver 30 makes a connection to the network service provider 300 and requests that the loaner or loaners be provided by sending to the network service provider 300 the identify of the program or programs that are needed. For the subscribing user, network service provider 300 may internally and automatically generate this request. The identity of the email message may also be provided so that any loaner program can be appropriately tagged to be disabled or destroyed upon printout or closing the email file in conjunction with which it is to be used.

In step 514, a loaner is provided. For example, the network service provider server 301 obtains a copy of the needed program from the library stored in the memory 302 and downloads the loaner to the receiver 30. Then, the process 500 proceeds to follow the steps 508-510 previously described above.

Returning to Fig. 1, in an alternative implementation of the present invention in which a web site 400, comprising a web server 401 including program memory 402, a program library memory 403 storing a library of programs, an optional security memory 404 storing security codes and a modem 405, is employed. Web site 400 is connected to network service provider 300 by a network connection 320 and to a second receiver 50 by way of a network connection 420 and modem 54. The second receiver 50 may suitably include a display 51, a central processing unit 52, a keyboard 53, a facsimile machine 55 and a number of further peripherals consistent with a user's needs. Such further peripherals are not shown, as they are well known and for purposes of ease of illustration.

As discussed below in conjunction with Fig. 4, the web site 400 allows a user of the second receiver 50 to download fully usable email and attachments without having compatible software with that employed by a sender, such as the sender 10, and without downloading application software. This approach may be implemented in a fashion that is more subject to central control, and as such is probably more secure and less susceptible to fraud. System operation may be faster as a receiver need not download an extensive word processing, graphics program or the like. Further, central control may facilitate negotiation of license fees for software usage and billing for those fees.

Fig. 4 shows a process 600 for providing universal compatibility and readability of email and attachments for use in conjunction with a web site such as the web site 400 as described further below. In step 601, a sender utilizes a sending terminal, such as the sender 10 of Fig. 1 to prepare an email and attachments. In step 602, the sender preferably establishes a first indicator which indicates the program or programs utilized in creating the email and attachments created in step 601. It will be recognized that alternatively, this step 602 may be skipped and that a receiver may transmit his or her requirements to fully access the email and attachments as further indicated below. Alternatively, as discussed above, the receiver's requirements may be known from a stored user profile. In step 603, the email and attachments are sent along with the indicator if one has been generated. By way of example, the sender 10 may utilize the modem 14 to send the email and attachments through an email provider such as email provider 200 or as shown in Fig. 1 through the network service provider 300 to the second receiver 50.

In step 604, the email and attachments are received and a determination is made whether the receiver has all the necessary software to fully utilize the email and attachments. By way of example, the recipient at receiver 50 can manually review a received email and attachments to determine if an incompatibility problem exists. Alternatively, a suitably programmed processor in the central processing unit 52 may make this determination or the information may be stored in a user profile.

In any case, in step 605, a request for access to a web site, such as the web site 400, which includes the necessary software to provide full access to and utilization of the email and attachments is generated. If necessary, loaner web browser software may be downloaded to the receiver. Where security is a concern, in step 406, a password may be required to gain access to the web site and the email and its attachments. It will be recognized that various other security features may be employed depending upon the system environment.

In step 607, an indication of which additional programs are necessary to fully access the email and attachments is generated. By way of example, the network service provider 300 provides the indicator of step 602 to the web site 400. Alternatively, the information is sent by receiver 50 to network service provider 300 which passes it along to web site 400, or web server 401 may be programmed to analyze the email and attachments to determine the needed programs.

In step 608, the full email and attachments are made available to the recipient. For example, the web site 400 locates the needed programs in memory 403, recalls them from memory and connects with receiver 50 once the email and attachments are ready to be browsed by the user at receiver 50. This process enables the recipient to download the email and attachments by printing them from the web site 400 using a standard print function of a common online browser software presently utilized to download and print text and graphics from typical existing web sites.

Figs. 5A and 5B show possible menus 17 and 37 respectively which might suitably be displayed on displays, such as the displays 11 and 31, to provide senders and recipients with a variety of payment options for obtaining a loaner program. Fig. 5A shows a textual display which leads a sender through a variety of payment options where the sender wants to pay to insure that the recipient has full access to the material which is being sent. First, the sender indicates that he or she wants to pay the cost of providing a loaner, in the example shown in Fig. 5A, the Word for Windows® application. Next, a choice between text only or text and graphics files is presented. Then, a variety of cost options for providing the loaner are presented. Finally, the sender can select the mailing list of intended recipients. While the costs illustrated are merely exemplary, it will be noted that alternatives are to send a hard copy by an overnight service or by facsimile which will not have the immediacy of email or the usability, and which are also relatively costly.

Fig. 5B shows an exemplary illustration of a menu to allow a recipient to choose to pay for a loaner program, again in the example shown, the Word for Windows® program. As shown, the recipient first indicates a desire to pay or not. Then, a choice is made between text only or text and graphics files. Finally, the recipient can agree to pay the fee for the loaner.

While the present invention has been disclosed in the presently preferred context for embodying the invention as a value added service to be provided under the control of a network service provider or web site, it will be recognized that the present invention may be variously embodied utilizing various combinations of hardware and software limited solely by the claims which follow.

## Claims

1. A method for providing improved readability of email communications including attachments where the email's sender and the email's receiver do not have fully compatible software, the method comprising the steps of:
creating an email (501) and attachments;
providing an indicator (502) which identifies the software programs utilized in creating the email and attachments;
attaching the indication (502) to the email and attachments; and
sending the email and attachments (511, 507) with the attached indicator.

2. The method of claim 1 further comprising the step of requesting a loaner software program (505) based upon the attached indicator.

3. The method of claim 2 further comprising the step of providing the requested loaner software (506) to a recipient of the email and attachments.

4. The method of claim 3 further comprising the step of disabling or destroying the provided loaner software (509) after the email and attachments have been printed.

5. The method of claim 3 further comprising the step of providing a recipient with an option of purchasing additional usage of provided loaner software or having said software disabled or destroyed after a predetermined limited use.

6. The method of claim 3 further comprising the steps of:
opening a file and utilizing the provided loaner software (508) to display the email and attachments; and
automatically disabling or destroying the provided loaner software (509) after the file is closed.

7. The method of claim 2 further comprising the step of authorizing payment (510) for the requested loaner software.

8. A method for providing improved readability of email communications including attachments where the email's sender and the email's receiver do not have fully compatible software, the method comprising the steps of:
establishing a network service provider (300) including a network service provider server and a memory;
storing a library of lower software (302) in the memory;
receiving a request for the network service provider to provide a specific lower program;
reviewing the specific lower program from the library of loaner software; and
providing the specific lower program.

9. The method of claim 8 further comprising the step of automatically destroying or disabling the specific lower program after a predefined limited use of the specific lower program.

10. The method of claim 9 wherein said predefined limited use constitutes the passage of a fixed amount of time.

11. The method of claim 8 further comprising the step of indicating responsibility for payment for the specific loaner program.

12. The method of claim 1 further comprising the steps of:
establishing a web site (40) including a web site server and a memory;
storing a library of loaner software (402) in the memory;
receiving a request for the web site to make an email and attachment available for browsing making use of a specific lower program;
retrieving the specific lower program from the library of lower software; and
making the email and attachment available for browsing.

13. The method of claim 12 further comprising the step of requiring a potential browser of an email and attachment to enter a password (404) before making the email and attachment available for browsing.

14. The method of claim 12 further comprising the step of downloading the email and attachment.

15. The method of claim 12 further comprising the step of printing the email and attachment from the web site.

16. The method of claim 12 further comprising the step of downloading a loaner copy of browser software to the email's receiver.

17. The method of claim 12 further comprising the step of indicating who will be responsible for paying for any loaner software utilized to make the email and attachment available for browsing.

18. The method of claim 1 further comprising the steps of:
sending the email and attachments to a receiver;
requesting a network service provider to provide a loaner program or programs to the receiver; and
providing the loaner program or programs from the network service provider to the receiver.

19. The method of claim 18 further comprising the step of:
disabling or destroying the loaner program or programs after a limited use.

20. The method of claim 18 further comprising the steps of:
generating a user profile including a listing of the software resources of the user;
storing the user profile in a network service provider;
determining from the stored user profile if the user has the necessary resources to fully access an email and attachments; and
providing additional resources to make the email and attachments fully available to the user.
